# EUROPÄISCHE PATENTSCHRIFT

(11) **EP 2 527 616 B1**
(45) Veröffentlichungstag und Bekanntmachung des Hinweises auf die Patenterteilung: **27.11.2013**
(21) Anmeldenummer: 12161059.6
(22) Anmeldetag: 23.03.2012
(51) Int. Cl.: F02B 37/18, F16K 1/20

(54) **Verschlussklappe**
Flap valve
Clapet de fermeture

(30) Priorität: 27.04.2011 DE 102011017578
(43) Veröffentlichungstag der Anmeldung: 28.11.2012
(73) Patentinhaber: Bayerische Motoren Werke Aktiengesellschaft, 80809 München (DE)
(72) Erfinder: Dr. Heiderich, Martin, 85640 Putzbrunn (DE); Velthuis, Jan, 86899 Landsberg (DE)

(56) Entgegenhaltungen:
- JP-U- 63 171 625
- US-A- 4 098 085
- US-A- 4 719 757
- US-A1- 2002 104 567

## Beschreibung

Die Erfindung betrifft eine Verschlussklappe mit den Merkmalen aus dem Oberbegriff des Patentanspruchs 1.

Aus dem britischen Patent 960,110 ist beispielsweise eine Verschlussklappe für einen Bypass in einem Abgasturboladergehäuse bekannt. Die Verschlussklappe ist an einem Schwenkarm befestigt, der seinerseits beidseitig der Verschlussklappe schwenkbar in dem Abgasturboladergehäuse gelagert ist. Das Abgasturboladergehäuse ist ein zweiflutiges Abgasturboladergehäuse mit zwei Bypässen, wobei beide Bypässe oder Waste-Gates mit derselben Verschlussklappe gleichzeitig verschlossen werden.

Aus der deutschen Offenlegungsschrift DE 39 16 221 A1 ist eine Verschlussklappe für einen Bypass oder Waste-Gate in einem Abgasturboladergehäuses bekannt. In diesem Fall ist die Verschlussklappe ebenfalls an einen Schwenkarm angeordnet, der in dieser Ausführung beidseitig der Verschlussklappe in dem Abgasturboladergehäuse gelagert ist. Um größere Schließkräfte von dem Schwenkarm auf die Verschlussklappe übertragen zu können, ist die Verschlussklappe mittels eines Formschlusses (Vierkant) an dem Schwenkarm befestigt.

Aus dem japanischen Gebrauchsmuster, JP 63-171625 U, von der die vorliegende Erfindung ausgeht, ist eine Verschlussklappe für einen Bypass eines Abgasturboladergehäuses bekannt. In dem Abgasturboladergehäuse ist in einem Lager ein schwenkbarer Schwenkarm gelagert, wobei von dem Abgasturboladergehäuse zu dem Lager ein Widerlager für den Schwenkarm gebildet ist. Zwischen dem Schwenkarm und dem Widerlager ist eine Punkt- oder Linienberührung ausgebildet, wobei der Schwenkarm im Bereich der Punkt- oder Linienberührung eine tonnenförmige Erhebung aufweist.

Nachteilig an beiden o. g. Beispielen ist eine relativ hohe Lagerreibung beim Verschwenken der Verschlussklappe aufgrund der beidseitigen Lagerung im Abgasturboladergehäuse.

Aufgabe der vorliegenden Erfindung ist es, eine Maßnahme aufzuzeigen, wie die Reibung beim Betätigen einer gattungsgemäßen Verschlussklappe minimiert werden kann.

Diese Aufgabe wird durch das Merkmal im kennzeichnenden Teil des Patentanspruchs 1 gelöst.

Durch die erfindungsgemäße Ausgestaltung wird die Pressung zwischen dem Schwenkarm und dem von dem Abgasturboladergehäuse gebildeten Widerlager reduziert, wodurch auch kostengünstigere Materialien zum Einsatz kommen können. Weiter weist die erfindungsgemäße Ausgestaltung eine besonders gute Robustheit bezüglich des Verschließens des Waste-Gates oder Bypasses auf, was einen funktionalen Vorteil über die Laufzeit mit sich bringt.

Vorteilhafte Weiterbildungen der Erfindung sind in den Unteransprüchen beschrieben.

Durch die erfindungsgemäße Ausgestaltung ist eine spielbehaftete Positionierung der Erhebung bzw. der Nocke zum Widerlager möglich, wodurch eine Verschleißgrenze in der Lagerung auf der Betätigungsseite eingestellt werden kann. Im geöffneten Zustand des Waste-Gates oder Bypasses wird die Erhebung oder Nocke vom Widerlager abgehoben und es ist eine freie Drehbewegung des Schwenkarms in der Lagerung sichergestellt.

Im Folgenden ist die Erfindung anhand eines bevorzugten Ausführungsbeispieles in zwei Figuren näher erläutert.
- Fig. 1: zeigt eine erfindungsgemäße Verschlussklappe für einen Bypass in einem Abgasturboladergehäuse in einer geschlossenen Stellung.
- Fig. 2: zeigt die erfindungsgemäße Verschlussklappe für einen Bypass in einem Abgasturboladergehäuse in einer geöffneten Stellung.

Im Folgenden gelten für gleiche Bauelemente für beide Figuren die gleichen Bezugsziffern.

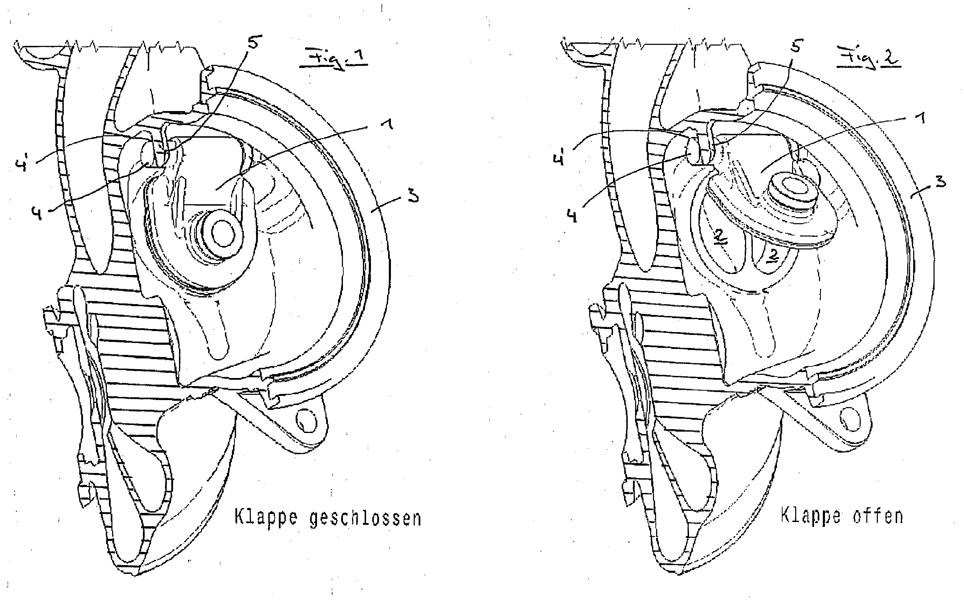

Fig. 1 zeigt einen Schnitt durch ein Abgasturboladergehäuse 3, hier beispielsweise ein Turbinengehäuse, wobei die erfindungsgemäße Ausgestaltung einer Verschlussklappe 1 auch in einem Verdichtergehäuse Einsatz finden kann. Eine Schnittfläche des Abgasturboladergehäuses 3 ist schraffiert dargestellt. Die Verschlussklappe 1 ist zum Verschließen und Öffnen für einen in Fig. 2 ersichtlichen Bypass 2 vorgesehen. Dieser ist in diesem Ausführungsbeispiel zweiflutig ausgebildet, kann in einem weiteren Ausführungsbeispiel jedoch auch einflutig sein. Die Verschlussklappe 1 ist an einem Schwenkarm 4 befestigt, der auf einer Antriebsseite, die Seite, auf der der Schwenkarm 4 von einem Stellelement betätigt wird, in dem Abgasturboladergehäuse 3 schwenkbar in einem Lager gelagert ist. Auf der dem Lager abgewandten Seite bildet das Abgasturboladergehäuse 3 ein Widerlager 5 für den Schwenkarm 4. Erfindungsgemäß ist der Schwenkarm 4 über eine Punkt- oder Linienberührung auf dem Widerlager 5 abgestützt.

In dem vorliegenden Ausführungsbeispiel weist der Schwenkarm 4 im Bereich der Punkt- oder Linienberührung eine radiale Erhebung 4' auf, die als Nocke ausgebildet ist. Weiter ist aus Fig. 1 ersichtlich, dass bei einer geschlossenen Verschlussklappe 1 die Erhebung 4' mit dem Widerlager 5 in Wirkverbindung steht.

Fig. 2 zeigt denselben Schnitt durch das Abgasturboladergehäuse 3 wie Fig. 1, jedoch ist in Fig. 2 die Verschlussklappe 1 geöffnet und der zweiflutige Bypass 2 ist ersichtlich. Weiter ist in Fig. 2 ersichtlich, dass bei geöffneter Verschlussklappe 1 die Erhebung 4' nicht auf dem Widerlager 5 abgestützt ist. Wie bereits erwähnt, kann die Verschlussklappe 1 turbinenseitig und/oder verdichterseitig angeordnet werden.

Durch eine spielbehaftete Positionierung der Erhebung 4' zum Widerlager 5 kann eine Verschleißgrenze an der Hauptlagerung (antriebsseitig) im Abgasturboladergehäuse eingestellt werden. Im geöffneten Zustand hebt die Erhebung 4' vom Widerlager 5 ab und stellt somit eine freie Drehbewegung der Verschlussklappe 1 in der Lagerung sicher.

Die erfindungsgemäße Ausgestaltung erzielt eine sehr gute Robustheit bezüglich dem Schließen des Bypasses oder Waste-Gates, was zu einem funktionalen Vorteil über die Laufzeit führt. Weiter wird eine Pressung zwischen dem Widerlager 5 und dem Schwenkhebel 4 reduziert, was den Einsatz kostengünstiger Materialien ermöglicht, sofern dies nicht durch andere Randbedingungen, wie z. B. der Temperatur limitiert ist.

### Bezugszeichenliste:

- 1.: Verschlussklappe
- 2.: Bypass
- 3.: Abgasturboladergehäuse
- 4.: Schwenkarm
- 4': Erhebung
- 5.: Widerlager

## Patentansprüche

1. Verschlussklappe (1), insbesondere für einen Bypass (2) eines Abgasturboladergehäuses (3), mit einem in dem Abgasturboladergehäuse (3) in einem Lager schwenkbar gelagerten Schwenkarm (4), wobei von dem Abgasturboladergehäuse (3) zu dem Lager ein Widerlager (5) für den Schwenkarm (4) gebildet ist, wobei zwischen dem Schwenkarm (4) und dem Widerlager (5) eine Punkt- oder Linienberührung ausgebildet ist und der Schwenkarm (4) im Bereich der Punkt- oder Linienberührung eine radiale Erhebung (4') aufweist,
**dadurch gekennzeichnet, dass** die Erhebung (4') eine Nockenform aufweist.

2. Verschlussklappe nach Patentanspruch 1,
**dadurch gekennzeichnet, dass** bei geschlossener Verschlussklappe (1) die Erhebung (4') mit dem Widerlager (5) in Wirkverbindung steht.

3. Verschlussklappe nach Patentanspruch 1 oder 2,
**dadurch gekennzeichnet, dass** die Verschlussklappe (1) für ein zweiflutiges Abgasturboladergehäuse (3) vorgesehen ist.

4. Verschlussklappe nach einem der Patentansprüche 1 bis 3,
**dadurch gekennzeichnet, dass** die Verschlussklappe (1) turbinenseitig und/oder verdichterseitig anordenbar ist.

## Claims

1. A shutter (1), especially for a bypass (2) of a turbocharger casing (3), comprising a swivel arm (4) pivotably mounted on a bearing in the turbocharger casing (3), wherein an abutment for the swivel arm (4) is formed from the turbocharger casing (3) to the bearing, wherein point or line contact is provided between the swivel arm (4) and the abutment (5) and the swivel arm (4) has a radial raised part (4') in the neighbourhood of the point or line contact, **characterised in that** the raised portion (4') has a cam shape.

2. A shutter according to claim 1, **characterised in that** when the shutter (1) is closed the raised portion (4') is in operative contact with the abutment (5).

3. A shutter according to claim 1 or claim 2, **characterised in that** the shutter (1) is provided for a double-entry turbocharger casing (3).

4. A shutter according to any of claims 1 to 3, **characterised in that** the shutter (1) can be disposed on the turbine side and/or the compressor side.

## Revendications

1. Clapet de fermeture (1) en particulier pour un by-pass (2) du carter (3) d'un turbocompresseur de gaz d'échappement comprenant un bras pivotant (4) monté pivotant dans un palier dans le carter (3) du turbocompresseur de gaz d'échappement dans lequel, du carter (3) du turbocompresseur de gaz d'échappement vers le palier est montée une butée (5) pour le bras pivotant (4), entre le bras pivotant (4) et la butée (5) est réalisé un contact ponctuel ou linéaire, et le bras oscillant (4) comporte un bossage radial (4') dans la zone du contact ponctuel ou linéaire,
**caractérisé en ce que**
le bossage (4') est en forme de came.

2. Clapet de fermeture conforme à la revendication 1,
**caractérisé en ce que**
lorsque le clapet de fermeture (1) est fermé le bossage (4') est en liaison fonctionnelle avec la butée (5).

3. Clapet de fermeture conforme à la revendication 1 ou 2,
**caractérisé en ce qu'**
il est destiné à un carter de turbocompresseur de gaz d'échappement (3) à deux étages.

4. Clapet de fermeture conforme à l'une des revendications 1 à 3,
**caractérisé en ce que**
le clapet de fermeture (1) peut être monté côté turbine et/ou côté compresseur.
